# EUROPEAN PATENT APPLICATION

(11) **EP 4 790 100 A1**
(43) Date of publication of application: **12.08.2026**
(21) Application number: 24874381.7
(22) Date of filing: 26.08.2024
(51) Int. Cl.: C08L 77/06, C08J 3/20, C08K 7/14, C08L 77/00

(54) **RESIN COMPOSITION, PELLET, AND MOLDED ARTICLE**

(30) Priority: 02.10.2023 JP 2023171468
(71) Applicant: MITSUBISHI GAS CHEMICAL COMPANY, INC., Chiyoda-ku Tokyo 100-8324 (JP)
(72) Inventor: SHIMADA NAKAMURA, Jin, Tokyo 100-8324 (JP); ISHIHARA TOMITA, Eri, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2024/030162
(87) International publication number: WO 2025/074767

(57) **Abstract**

Provided are a resin composition, a pellet, and a molded article. The resin composition contains a xylylenediamine-based polyamide resin, an aliphatic polyamide resin, and a reinforcing filler, in which the xylylenediamine-based polyamide resin contains diamine-derived structural units and dicarboxylic acid-derived structural units, 70 mol% or more of the diamine-derived structural units are derived from xylylenediamine, and 70 mol% or more of the dicarboxylic acid-derived structural units are derived from an α,ω-linear aliphatic dicarboxylic acid having from 11 to 20 carbon atoms.

## Description

### Technical Field

The present invention relates to a resin composition, a pellet, and a molded article. In particular, the present invention relates to a resin composition in which a polyamide resin is used as a major component.

### Background Art

Polyamide resins, being excellent in various performance properties, are applied in a wide range of fields. In particular, two or more polyamide resins are blended to attain the desired performance.

For example, Patent Document 1 discloses a polyamide resin composition containing 0.03 parts by mass or more and 0.3 parts by mass or less of a compound (C) and/or a compound (D) and 0.03 parts by mass or more and 0.3 parts by mass or less of a hindered phenol antioxidant (E) with respect to 100 parts by mass of a polyamide resin (Z) containing 70 mass% or more and 98 mass% or less of a semi-aromatic polyamide (A) and 30 mass% or more and 2 mass% or less of an aliphatic polyamide (B), in which the semi-aromatic polyamide (A) is composed of a diamine unit containing 70 mol% or more of a unit derived from m-xylylenediamine and/or p-xylylenediamine with respect to all diamine units and a dicarboxylic acid unit containing 70 mol% or more of a unit derived from an aliphatic dicarboxylic acid having 6 or more and 12 or less carbon atoms with respect to all dicarboxylic acid units; and the compound (C) is a polyalkylene glycol (C1) having a number average molecular weight of 4000 or less or a partial ester compound (C2) of a polyalkylene glycol and a fatty acid; the compound (D) is a partial ester compound (D1) of a trihydric or higher alcohol and a fatty acid, or a partial ester compound (D2) of an alkylene oxide adduct of a trihydric or higher alcohol and a fatty acid; and the hindered phenol antioxidant (E) has a predetermined structure.

Patent Document 2 discloses the use, particularly for limiting warpage of a composition during injection or compression molding, of at least one MXDZ polyamide obtained by polycondensation of m-xylylenediamine (MXD) with C6-C18, particularly C6 to C12, aliphatic (Z) dicarboxylic acids in a mixture further containing at least one aliphatic polyamide A obtained by polycondensation of units selected from XY units derived from polycondensation of -C6 to C12 lactams, -C6 to C12 amino acids, and C4 to C18, particularly C4 to C12, aliphatic diamines (X), and C6 to C18, particularly C6 to C12, aliphatic dicarboxylic acids (Y), circular-cross-section glass fibers and optionally at least one impact modifier and/or at least one additive, in which the MXDZ polyamide and the mixture constitute the composition, and a MXDZ/A weight ratio is from 0.11 to 0.83, particularly from 0.11 to 0.66.

### Citation List

### Patent Document

Patent Document 1: JP 2012-107217 A
Patent Document 2: JP 2019-531394 T

### Summary of Invention

### Technical Problem

Here, when the polyamide resin composition is molded using a mold such as injection molding, one of the problems is to appropriately solidify the polyamide resin composition even in the mold. In particular, when molding is performed using a mold such as injection molding, it is necessary to appropriately crystallize the resin composition in the mold. In addition, even if crystallization proceeds sufficiently in the mold, if various physical properties originally expected for the polyamide resin composition are poor, required performance is poor. In particular, it may be difficult to adjust with a formulation containing a reinforcing filler.

The present invention is intended to solve such problems, and an object thereof is to provide a resin composition that can be appropriately crystallized in a mold and that has an excellent balance of other physical properties, and also to provide a pellet and a molded article.

### Solution to Problem

In view of the above problems, the present inventors have conducted studies, and as a result, have found that in a resin composition containing a xylylenediamine-based polyamide resin, an aliphatic polyamide resin, and a reinforcing filler, the above-mentioned problems can be solved by using an aliphatic dicarboxylic acid having a relatively long chain length as a raw material monomer of the xylylenediamine-based polyamide resin.

Specifically, the above-described issues have been solved by the following means.
<1> A resin composition including a xylylenediamine-based polyamide resin, an aliphatic polyamide resin, and a reinforcing filler, in which
   the xylylenediamine-based polyamide resin includes diamine-derived structural units and dicarboxylic acid-derived structural units,
   70 mol% or more of the diamine-derived structural units are derived from xylylenediamine, and
   70 mol% or more of the dicarboxylic acid-derived structural units are derived from an α,ω-linear aliphatic dicarboxylic acid having from 11 to 20 carbon atoms.
<2> The resin composition according to <1>, in which from 10 mol% to 90 mol% of the diamine-derived structural units in the xylylenediamine-based polyamide resin are derived from m-xylylenediamine, and from 90 mol% to 10 mol% of the diamine-derived structural units are derived from p-xylylenediamine, provided that a total of m-xylylenediamine and p-xylylenediamine does not exceed 100 mol%.
<3> The resin composition according to <1>, in which 70 mol% or more of the dicarboxylic acid-derived structural units in the xylylenediamine-based polyamide resin are derived from dodecanedioic acid and/or tetradecanedioic acid.
<4> The resin composition according to <1>, in which
   from 10 mol% to 90 mol% of the diamine-derived structural units in the xylylenediamine-based polyamide resin are derived from m-xylylenediamine, and from 90 mol% to 10 mol% of the diamine-derived structural units are derived from p-xylylenediamine, provided that a total of m-xylylenediamine and p-xylylenediamine does not exceed 100 mol%; and
   70 mol% or more of the dicarboxylic acid-derived structural units in the xylylenediamine-based polyamide resin are derived from dodecanedioic acid and/or tetradecanedioic acid.
<5> The resin composition according to any one of <1> to <4>, in which the aliphatic polyamide resin includes a structural unit including -(CH₂)ₙ-, where n is from 3 to 20.
<6> The resin composition according to any one of <1> to <4>, in which the aliphatic polyamide resin includes at least one selected from the group consisting of polyamide 6, polyamide 66, polyamide 46, polyamide 666, polyamide 10, polyamide 11, polyamide 12, polyamide 610, polyamide 611, and polyamide 612.
<7> The resin composition according to any one of <1> to <6>, in which a mass ratio of the xylylenediamine-based polyamide resin to the aliphatic polyamide resin is from 5:95 to 80:20.
<8> The resin composition according to any one of <1> to <7>, in which the reinforcing filler includes a glass fiber.
<9> The resin composition according to any one of <1> to <8>, in which the reinforcing filler includes a chopped strand.
<10> A pellet of the resin composition described in any one of <1> to <9>.
<11> A molded article formed from the resin composition described in any one of <1> to <9>.
<12> The molded article according to <11>, in which the molded article is an injection-molded article.

### Advantageous Effects of Invention

According to the present invention, it is possible to provide a resin composition that can be appropriately crystallized in a mold and that has an excellent balance of other physical properties, and to provide a pellet and a molded article.

### Description of Embodiments

Hereinafter, embodiments for carrying out the present invention (hereinafter, simply referred to as "the present embodiment") will be described in detail. The present embodiments described below are examples for describing the present invention, and the present invention is not limited only to the present embodiments.

In the present description, "from ... to ..." is used to mean that the numerical values described before and after "to" are included as the lower limit value and the upper limit value, respectively.

In the present description, various physical property values and characteristic values are those at 23°C unless otherwise noted.

In the present description, the number average molecular weight is a value measured by the following method unless otherwise noted.

The number average molecular weight (Mn) is determined in terms of a polymethyl methacrylate (PMMA) standard through gel permeation chromatography (GPC) measurement. Two columns, in which a styrene-based polymer is charged as a filler, are used as columns. Hexafluoroisopropanol (HFIP) having a sodium trifluoroacetate concentration of 2 mmol/L is used as a solvent. The measurement is performed at a resin concentration of 0.02 mass%, a column temperature of 40°C, a flow rate of 0.3 mL/min, using a refractive index detector (RI). The calibration curve is measured by dissolving 6 levels of PMMA in HFIP.

In the present description, the melting point (Tm) is a value measured through differential scanning calorimetry (DSC) in accordance with ISO 11357, unless otherwise noted. A differential scanning calorimeter is used, and the resin is placed in a measuring pan of the differential scanning calorimeter, and subjected to a pretreatment of heating to a temperature exceeding the melting point at a temperature increase rate of 10°C/min under a nitrogen atmosphere and then performing rapid cooling, thereafter the measurements are performed. As the measurement conditions, the temperature was increased to 280°C at a temperature increase rate of 10°C/min, and then maintained at 280°C for 5 minutes, after which the temperature is reduced to 100°C at a temperature decrease rate of -5°C/min, and the measurement is then performed to determine the melting point (Tm).

The differential scanning calorimeter used is "DSC-60" available from Shimadzu Corporation.

When the measurement methods or the like described in the standards set forth in the present description differ depending on the year, the measurement methods or the like are based on the standards as of January 1, 2023, unless otherwise noted.

The resin composition of the present embodiment is characterized by containing a xylylenediamine-based polyamide resin, an aliphatic polyamide resin, and a reinforcing filler, in which the xylylenediamine-based polyamide resin contains diamine-derived structural units and dicarboxylic acid-derived structural units, 70 mol% or more of the diamine-derived structural units are derived from xylylenediamine, and 70 mol% or more of the dicarboxylic acid-derived structural units are derived from an α,ω-linear aliphatic dicarboxylic acid having from 11 to 20 carbon atoms.

With such a constitution, the resin composition can be appropriately crystallized in a mold, and a resin composition having an excellent balance of other physical properties can be obtained. The reason for this is presumed to be the use of an aliphatic dicarboxylic acid having a long carbon chain (α,ω-linear aliphatic dicarboxylic acid having from 11 to 20 carbon atoms) as a raw material monomer of the xylylenediamine-based polyamide resin. That is, the polyamide resin in which 70 mol% or more of the diamine-derived structural units are derived from xylylenediamine is a resin in which crystallization is less likely to proceed among polyamide resins. Typical examples of the xylylenediamine-based polyamide resin in which such crystallization is less likely to proceed include a polyamide resin synthesized from xylylenediamine and an α,ω-linear aliphatic dicarboxylic acid having 10 carbon atoms (sebacic acid) and a resin synthesized from xylylenediamine and adipic acid. In the present embodiment, it is presumed that when 70 mol% or more of the dicarboxylic acid-derived structural units are derived from an α,ω-linear aliphatic dicarboxylic acid having from 11 to 20 carbon atoms, the chain length is extended, and the molecular mobility of the polyamide resin is presumed to be enhanced. Furthermore, an increase in chain length tends to lower the glass transition temperature, which is presumed to result from enhanced mobility of the polyamide molecules even at low temperatures. It is surprising that this small difference in the number of carbon chains contributed significantly to the acceleration of the crystallization rate.

### <Xylylenediamine-Based Polyamide Resin>

The resin composition of the present embodiment contains a polyamide resin containing diamine-derived structural units and dicarboxylic acid-derived structural units, in which 70 mol% or more of the diamine-derived structural units are derived from a xylylenediamine (sometimes simply referred to as "xylylenediamine-based polyamide resin" in the present description). Such a xylylenediamine-based polyamide resin is a polyamide resin excellent in various performance properties, and its excellent physical properties are also exhibited in the resin composition of the present embodiment.

In the xylylenediamine-based polyamide resin, more preferably 75 mol% or more, still more preferably 80 mol% or more, even more preferably 90 mol% or more, even still more preferably 95 mol% or more, and particularly even more preferably 99 mol% or more of the diamine-derived structural units are derived from a xylylenediamine (preferably p-xylylenediamine and/or m-xylylenediamine).

The xylylenediamine is preferably p-xylylenediamine and/or m-xylylenediamine. The xylylenediamine preferably contains from 0 mol% to 100 mol% of m-xylylenediamine and from 100 mol% to 0 mol% of p-xylylenediamine (provided that the total of m-xylylenediamine and p-xylylenediamine does not exceed 100 mol%), more preferably contains from 10 mol% to 100 mol% of m-xylylenediamine and from 90 mol% to 0 mol% of p-xylylenediamine, still more preferably contains from 10 mol% to 90 mol% of m-xylylenediamine and from 90 mol% to 10 mol% of p-xylylenediamine, even more preferably contains from 40 mol% to 90 mol% of m-xylylenediamine and from 60 mol% to 10 mol% of p-xylylenediamine, and even still more preferably contains from 60 mol% to 90 mol% of m-xylylenediamine and from 40 mol% to 10 mol% of p-xylylenediamine.

In the xylylenediamine-based polyamide resin, the total of p-xylylenediamine-derived structural units and m-xylylenediamine-derived structural units accounts for preferably 80 mol% or more, more preferably 85 mol% or more, still more preferably 90 mol% or more, even more preferably 95 mol% or more, even still more preferably 98 mol% or more, and yet even still more preferably 99 mol% or more of the diamine-derived structural units. The upper limit of the total of p-xylylenediamine-derived structural units and m-xylylenediamine-derived structural units is 100 mol%. When the proportion of m-xylylenediamine is 10 mol% or more, the appearance of the surface of a test piece when injection molding is performed under a low mold temperature condition tends to be further improved. When the proportion of p-xylylenediamine is 10 mol% or more, crystallization can be promoted at a lower mold temperature.

Examples of the diamine that can be used as a raw material diamine component of the xylylenediamine-based polyamide resin, other than m-xylylenediamine or p-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, or bis(aminomethyl)tricyclodecane; and a diamine having an aromatic ring, such as bis(4-aminophenyl)ether, p-phenylenediamine, or bis(aminomethyl)naphthalene. One of these diamines, or a mixture of two or more of these may be used.

On the other hand, preferably 75 mol% or more, more preferably 80 mol% or more, still more preferably 85 mol% or more, even more preferably 90 mol% or more, even still more preferably 95 mol% or more, and particularly even more preferably 99 mol% or more of the dicarboxylic acid-derived structural units of the xylylenediamine-based polyamide resin are derived from an α,ω-linear aliphatic dicarboxylic acid having from 11 to 20 carbon atoms.

The α,ω-linear aliphatic dicarboxylic acid having from 11 to 20 carbon atoms, which is preferable to be used as a raw material dicarboxylic acid component of the xylylenediamine-based polyamide resin, is preferably an α,ω-linear aliphatic dicarboxylic acid having from 11 to 16 carbon atoms or an α,ω-linear aliphatic dicarboxylic acid having from 12 to 14 carbon atoms.

The α,ω-linear aliphatic dicarboxylic acid having from 11 to 20 carbon atoms is specifically dodecanedioic acid, tridecanedioic acid, tetradecanedioic acid, or the like, among which at least one of dodecanedioic acid and/or tetradecanedioic acid is preferable, and dodecanedioic acid is more preferable since the melting point of the polyamide resin falls within an appropriate range for molding processing.

Examples of the dicarboxylic acid component other than the above include α,ω-linear aliphatic dicarboxylic acids having 10 or less carbon atoms, such as adipic acid and sebacic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

Note that the xylylenediamine-based polyamide resin contains diamine-derived structural units and dicarboxylic acid-derived structural units as main components, but structural units other than these are not entirely excluded. Of course, the xylylenediamine-based polyamide resin may contain a structural unit derived from a lactam such as ε-caprolactam or laurolactam, or from an aliphatic aminocarboxylic acid such as aminocaproic acid or aminoundecanoic acid. Here, the main component means a component having the largest total number of the diamine-derived structural units and the dicarboxylic acid-derived structural units among all structural units constituting the xylylenediamine-based polyamide resin. In the present embodiment, the total of the diamine-derived structural units and the dicarboxylic acid-derived structural units in the xylylenediamine-based polyamide resin preferably accounts for 90 mass% or more, more preferably 95 mass% or more, still more preferably 97 mass% or more, even more preferably 99 mass% or more, of all structural units.

The xylylenediamine-based polyamide resin preferably uses a polyamide resin (biomass polyamide resin) produced by using a biomass raw material. Use of a biomass polyamide resin can reduce environmental load.

A raw material monomer that has been mass balance certified (ISCC PLUS) can also be used. The mass balance certification means that degrees of usage of reusable raw materials and raw biomaterials for each factory or production facility and degrees of production and shipment of products are quantified and certified together with quality.

The melting point of the xylylenediamine-based polyamide resin is preferably 150°C or more, more preferably 180°C or more, still more preferably 200°C or more, and is preferably 350°C or less, more preferably 330°C or less, still more preferably 300°C or less.

The lower limit of the number average molecular weight (Mn) of the xylylenediamine-based polyamide resin is preferably 6000 or greater, more preferably 8000 or greater, and even more preferably 10000 or greater, and is preferably 100000 or less, and more preferably 50000 or less. The polyamide with a number average molecular weight in such a range provides better thermal resistance, elastic modulus, dimensional stability, and moldability.

### <Aliphatic Polyamide Resin>

The resin composition of the present embodiment contains an aliphatic polyamide resin. The aliphatic polyamide resin used in the present embodiment is intended to contain an alicyclic polyamide resin, but is preferably a chain polyamide resin.

The aliphatic polyamide resin preferably contains a structural unit containing -(CH₂)ₙ- (n is from 3 to 20). n is preferably 4 or more, more preferably 5 or more, and is preferably 18 or less, more preferably 16 or less, still more preferably 14 or less, even more preferably 12 or less.

The aliphatic polyamide resin may be a copolymer containing a structural unit containing -(CH₂)ₙ- and having a different value of n, or may contain two aliphatic polyamide resins having different values of n.

In the structural unit n, a structural unit represented by any one or more of -NH-(CH₂)ₙ-C(=O)-, -NH-(CH₂)ₙ-NH-, and -C (=O)-(CH₂)ₙ-C (=O)- accounts for preferably 90 mass% or more of all structural units, more preferably 95 mass% or more of all structural units, and it is still more preferable that all structural units other than the terminal group are structural units represented by any one or more of the above structural units.

The aliphatic polyamide resin used in the present embodiment may be partially (for example, less than 5 mass%, even less than 3 mass%, particularly less than 1 mass%) substituted with an aromatic monomer or another monomer.

Examples of the aliphatic polyamide resin include polyamide 6, polyamide 66, polyamide 46, polyamide 666 (a copolymer composed of a polyamide 6 component and a polyamide 66 component), polyamide 10, polyamide 11, polyamide 12, polyamide 610, polyamide 611, polyamide 612, polyamide 410, and polyamide 1010, and the aliphatic polyamide resin more preferably includes at least one selected from polyamide 6, polyamide 66, polyamide 666, polyamide 46, polyamide 10, polyamide 11, polyamide 12, polyamide 610, polyamide 611, and polyamide 612.

### <Blend Form of Polyamide Resin>

In the resin composition of the present embodiment, the mass ratio of the xylylenediamine-based polyamide resin and the aliphatic polyamide resin is preferably from 5:95 to 80:20.

More specifically, regarding the content of the aliphatic polyamide resin in the resin composition of the present embodiment, the content of the aliphatic polyamide resin is preferably 5 parts by mass or more, more preferably 10 parts by mass or more, still more preferably 20 parts by mass or more, even more preferably 30 parts by mass or more, and even still more preferably 40 parts by mass or more, and is preferably 95 parts by mass or less, more preferably 90 parts by mass or less, still more preferably 80 parts by mass or less, even more preferably 70 parts by mass or less, and even still more preferably 60 parts by mass or less, with respect to 100 parts by mass of the total of the xylylenediamine-based polyamide resin and the aliphatic polyamide resin. When the content is equal to or more than the lower limit value, thermal resistance tends to further improve. When the content is equal to or lower than the upper limit value, fogging resistance tends to further improve.

The resin composition of the present embodiment may, or may not, contain a polyamide resin other than the aliphatic polyamide resin and the xylylenediamine-based polyamide resin.

Examples of the polyamide resin other than the aliphatic polyamide resin and the xylylenediamine-based polyamide resin include a semi-aromatic polyamide resin other than the xylylenediamine-based polyamide resin. Examples of the semi-aromatic polyamide resin include terephthalic acid-based polyamide resins (polyamide 6T, polyamide 9T, and polyamide 10T).

The resin composition of the present embodiment is preferably substantially free of a polyamide resin other than the aliphatic polyamide resin and the xylylenediamine-based polyamide resin. Being substantially free means that the content of the polyamide resin other than the aliphatic polyamide resin and the xylylenediamine-based polyamide resin contained in the resin composition is less than 10 mass% with respect to the total amount of polyamide resins other than the aliphatic polyamide resin and the xylylenediamine-based polyamide resin, preferably less than 5 mass%, more preferably less than 3 mass%, and still more preferably less than 1 mass%.

The total content of the polyamide resins (the xylylenediamine-based polyamide resin, the aliphatic polyamide resin, and additional polyamide resins blended as necessary) in the resin composition of the present embodiment is preferably 50 mass% or more, more preferably 60 mass% or more, still more preferably 65 mass% or more, and is preferably 80 mass% or less, more preferably 75 mass% or less in the resin composition.

### <Reinforcing Filler>

The resin composition of the present embodiment contains a reinforcing filler. The inclusion of the reinforcing filler can improve the mechanical strength of the obtained molded article.

The type of reinforcing filler that can be used in the present embodiment is not particularly specified, and the reinforcing filler may be any type, such as fibers, a filler, flakes, or beads, but fibers are preferable.

When the reinforcing filler is fibers, the fibers may be short fibers or long fibers, and are preferably long fibers.

Examples of the raw material of the reinforcing filler include inorganic materials such as glass, carbon (carbon fibers, etc.), alumina, boron, ceramic, metal (steel, etc.), asbestos, clay, zeolite, potassium titanate, barium sulfate, titanium oxide, silicon oxide, aluminum oxide, and magnesium hydroxide, and organic materials such as plants (including, for example, kenaf and bamboo), aramid, polyoxymethylene, aromatic polyamides, polyparaphenylene benzobisoxazole, and ultra-high molecular weight polyethylene, and of these, glass is preferable.

The resin composition of the present embodiment preferably contains glass fibers as the reinforcing filler.

The glass fibers are selected from glass compositions such as A glass, C glass, E glass, R glass, D glass, M glass, and S glass, and E glass (non-alkaline glass) is particularly preferable.

The number average fiber diameter of a single glass fiber is usually from 1 to 25 µm, and preferably from 5 to 17 µm. Moldability of the resin composition tends to further improve when the number average fiber diameter is set to 1 µm or greater. In addition, the appearance of the obtained molded article and the reinforcing effect tend to improve by setting the number average fiber diameter to 25 µm or less. The glass fiber may be a single fiber or a fiber obtained by intertwining a plurality of single fibers.

The form of the glass fiber may be any of a chopped strand (for example, a glass fiber cut into a length of from 1 to 10 mm), a milled fiber (for example, a glass fiber pulverized to a length of from 10 to 500 µm), and the like, but a chopped strand is preferable. Glass fibers of different forms may be used in combination.

A glass fiber having a cross-section of circular, polygonal, or irregular shape is preferable. In the irregular cross-sectional shape, the flatness represented by the major axis/minor axis ratio of a cross-section perpendicular to the length direction of the fiber is, for example, from 1.5 to 10, preferably from 2.5 to 10, more preferably from 2.5 to 8, and particularly preferably from 2.5 to 5.

As long as the characteristics of the resin composition of the present embodiment are not significantly impaired, the glass fiber may be, for example, a glass fiber that has been oxidized or a glass fiber that has been surface treated with a silane-based compound, an epoxy-based compound, a urethane-based compound, or the like in order to improve affinity with the resin component.

The reinforcing filler used in the present embodiment may be a reinforcing filler having electrical conductivity. Specific examples of such reinforcing materials include metals, metal oxides, conductive carbon compounds, and conductive polymers, and conductive carbon compounds are preferable.

The content of the reinforcing filler (preferably glass fiber) in the resin composition of the present embodiment is, with respect to 100 parts by mass of the total of the xylylenediamine-based polyamide resin and the aliphatic polyamide resin, preferably 10 parts by mass or more, more preferably 20 parts by mass or more, and still more preferably 30 parts by mass or more, and even more preferably 40 parts by mass or more. The mechanical strength of the obtained molded article tends to further improve by setting the content of the reinforcing filler to equal to or greater than the lower limit value described above. The content of the reinforcing filler (preferably glass fiber) is, with respect to 100 parts by mass of the total of the xylylenediamine-based polyamide resin and the aliphatic polyamide resin, preferably 100 parts by mass or less, more preferably 90 parts by mass or less, and still more preferably 85 parts by mass or less, even more preferably 80 parts by mass or less, and even still more preferably 75 parts by mass or less. Setting the content of the reinforcing filler to equal to or less than the upper limit value described above tends to improve the appearance of the molded article and further improve the fluidity of the resin composition.

The content of the reinforcing filler (preferably glass fiber) in the resin composition of the present embodiment is preferably 20 mass% or more, more preferably 25 mass% or more, and is preferably 50 mass% or less, more preferably 40 mass% or less, still more preferably 35 mass% or less in the resin composition.

The resin composition in the present embodiment may contain only one type of reinforcing filler (preferably glass fibers), or may contain two or more types thereof. When two or more reinforcing fillers are contained, the total amount is preferably in the range described above.

### <Other Components>

The resin composition of the present embodiment may contain components other than the above. Examples of components other than the above include a thermoplastic resin other than the polyamide resin, and a resin additive.

Examples of the resin additive include a nucleator, a mold release agent, a heat stabilizer, a light stabilizer, an antioxidant, an ultraviolet inhibitor, an alkali, a colorant, a hydrolysis resistance improver, a matting agent, a plasticizer, a dispersant, an antistatic agent, an antigelling agent, and a flame retardant.

In addition, the content of the resin additives in total is preferably 20.0 mass% or less, more preferably 10.0 mass% or less, still more preferably 5.0 mass% or less, and even more preferably 1.0 mass% or less of the resin composition. One type of additional additive may be used alone, or two or more types thereof may be used in combination.

For details on the additional additives, descriptions in paragraphs [0130] to [0155] of JP 4894982 B can be referred to, the contents of which are incorporated herein by reference.

In the resin composition of the present embodiment, the additive described in paragraphs [0047] to [0103] of WO 2021/241471 can be blended without departing from the spirit of the present invention, the contents of which are incorporated herein by reference.

In the resin composition of the present embodiment, the content and the like of the xylylenediamine-based polyamide resin, the aliphatic polyamide resin, the reinforcing filler, and other components to be blended as necessary are adjusted so that the total of the components is 100 mass%.

In the present embodiment, the total of the xylylenediamine-based polyamide resin, the aliphatic polyamide resin, and the reinforcing filler accounts for preferably 90 mass% or more, more preferably 95 mass% or more, and may account for 97 mass% or more of the resin composition in total.

In the present embodiment, the total of the xylylenediamine-based polyamide resin, the aliphatic polyamide resin, the reinforcing filler, and the nucleator preferably accounts for 95 mass% or more, more preferably 97 mass% or more, and may account for 99 mass% or more of the resin composition in total.

### <<Nucleator>>

The resin composition of the present embodiment may contain a nucleator.

The inclusion of the nucleator can improve the appearance of the obtained molded article. The nucleator may be an organic nucleator or an inorganic nucleator, but is preferably an inorganic nucleator. Examples of the nucleator include graphite, molybdenum disulfide, barium sulfate, talc, mica, calcium carbonate, sodium phosphate, boron nitride, and kaolin. The nucleator preferably contains one or more selected from talc, mica, calcium carbonate, and boron nitride, more preferably contains one or more selected from talc and calcium carbonate, and still more preferably contains talc.

The talc may be surface-treated with at least one of compounds selected from polyorganohydrogen siloxanes and organopolysiloxanes. In this case, the deposition amount of the siloxane compound in the talc is preferably from 0.1 to 5 mass% of the talc.

The lower limit value of the number average particle size of the nucleator is preferably 0.1 µm or more, and more preferably 0.5 µm or more. In addition, the upper limit value of the number average particle size of the nucleator is preferably 40 µm or less, more preferably 30 µm or less, even more preferably 28 µm or less, still more preferably 15 µm or less, and yet even more preferably 10 µm or less. When the number average particle size is set to 40 µm or less, the number of nucleators that become nuclei increases in proportion to the blended amount of the nucleator, and thus the crystal structure tends to be more stable.

When the resin composition of the present embodiment contains a nucleator, the content thereof is preferably 0.01 parts by mass or more, more preferably 0.05 parts by mass or more, still more preferably 0.1 parts by mass or more, and even more preferably 0.4 parts by mass or more with respect to 100 parts by mass of the total of the xylylenediamine-based polyamide resin and the aliphatic polyamide resin. The upper limit value of the content of the nucleator is preferably 5 parts by mass or less, more preferably 3 parts by mass or less, and still more preferably 2 parts by mass or less with respect to 100 parts by mass of the total of the xylylenediamine-based polyamide resin and the aliphatic polyamide resin.

The resin composition of the present embodiment may contain only one type of nucleator or two or more types thereof. When two or more nucleators are contained, the total amount is preferably in the range described above.

### <<Mold Release Agent>>

The resin composition of the present embodiment may contain a mold release agent.

Examples of the mold release agents include aliphatic carboxylic acids, salts of aliphatic carboxylic acids, esters of aliphatic carboxylic acids and alcohols, aliphatic hydrocarbon compounds having a number average molecular weight of from 200 to 15000, polysiloxane-based silicone oils, ketone waxes, and fatty acid amides. Aliphatic carboxylic acids, salts of aliphatic carboxylic acids, esters of aliphatic carboxylic acids and alcohols, and fatty acid amides are preferable, and fatty acid amides are more preferable.

For details on the mold release agent, refer to the disclosures in paragraphs [0055] to [0061] of JP 2018-095706 A, the contents of which are incorporated herein.

When the resin composition of the present embodiment contains a mold release agent, the content thereof is preferably from 0.05 to 3 parts by mass, more preferably from 0.1 to 1 parts by mass, and still more preferably from 0.2 to 0.8 parts by mass or more, with respect to 100 parts by mass of the total of the xylylenediamine-based polyamide resin and the aliphatic polyamide resin.

The resin composition of the present embodiment may include only one type of mold release agent, or may include two or more types thereof. When two or more mold release agents are contained, the total amount is preferably in the range described above.

### <Method for Producing Resin Composition>

In the present embodiment, the method for producing the resin composition is not particularly specified, and a known method for producing a thermoplastic resin composition can be widely adopted. Specifically, the resin composition can be produced by premixing each component using various mixing machines, such as a tumbler and a Henschel mixer, and then melt-kneading the components using, for example, a Banbury mixer, a roll, a Brabender mixer, a single-screw extruder, a twin-screw extruder, or a kneader.

In addition, the resin composition can also be produced by, for example, not mixing the components in advance or mixing only some of the components in advance, feeding the components into an extruder using a feeder, and then melt-kneading the components.

Furthermore, pellets can also be produced by, for example, mixing some of the components in advance and feeding the mixture into an extruder to melt-knead the mixture and obtain a composition as a master batch, mixing the master batch again with the remaining components, and then melt-kneading the mixture.

The glass fibers are preferably side-fed.

### <Applications and Molded Article of Resin Composition>

A molded article of the present embodiment is formed from the resin composition or pellets of the present embodiment.

The method for producing the molded article of the present embodiment is not particularly limited. One example of the molded article is an injection-molded article molded by injection molding.

For example, the molded article of the present embodiment may be directly molded by various molding methods after the components are melt-kneaded, or may be molded by various molding methods after the components are melt-kneaded and pelletized, and then melted again.

The method for molding the molded article is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, and a pressure molding method.

In the present embodiment, a molding method using a mold such as an injection molding method is preferable.

In the case of molding the resin composition of the present embodiment, the resin composition is preferably molded at a mold temperature of from 80 to 150°C, and more preferably molded at a mold temperature of from 90 to 130°C.

In the case of molding the resin composition of the present embodiment, the resin composition is preferably molded at a mold temperature of from 70 to 110°C. The mold temperature is more preferably 80°C or more, and is preferably 100°C or less, more preferably 90°C or less.

The fields of application of the resin composition, pellet, and molded article of the present embodiment are not particularly limited, and the resin composition, pellet, and molded article of the present embodiment can be widely used in applications such as components for automobiles and other such transportation devices, general mechanical components, precision mechanical components, electronic and electrical device components, OA device components, building materials and building-related components, medical devices, leisure sporting goods, gaming devices, medical products, household goods such as food packaging films, and defense and aerospace products.

### Examples

Hereinafter, the present invention will be described more specifically with reference to Examples. Materials, amounts used, proportions, processing details, processing procedures, and the like described in the following Examples can be appropriately changed as long as they do not depart from the spirit of the present invention. Thus, the scope of the present invention is not limited to the specific examples described below.

When it is difficult to obtain a measuring instrument or the like used in Examples because of discontinuation or the like, another instrument with equivalent performance can be used for the measurements.

### 1. Raw Material

The following raw materials were used.

**[Table 1]**

| Abbreviation | Detail |
|---|---|
| PA66 | Polyamide 66, available from Toray Industries, Inc., CM3001-N |
| PA6 | Polyamide 6, available from UBE Corporation, 1018B |
| PA612 | Polyamide 612, available from UBE Corporation, 7034B, mass ratio of PA6:PA12 of about 7:3. |
| PA610 | Polyamide 610, available from Toray Industries, Inc., CM2001 |
| PA12 | Polyamide 12, available from UBE Corporation, 3030U |
| PA11 | Polyamide 11, available from Arkenma, Rilsan BESN TL |
| MP12 (30) | Polyamide resin of Synthesis Example 1 |
| MP12 (40) | Polyamide resin of Synthesis Example 2 |
| PXD12 | Polyamide resin of Synthesis Example 3 |
| MP14 (30) | Polyamide resin of Synthesis Example 4 |
| MP10 | Polyamide resin of Synthesis Example 5 |
| MXD6 | Polyamide resin synthesized from m-xylylenediamine and adipic acid, available from Mitsubishi Gas Chemical Company, Inc., #6000 |
| Reinforcing filler | Glass fiber, GF T-275H, available from Nippon Electric Glass Co., Ltd. |
| Nucleator | Talc: Micron White 5000S, available from HAYASHI KASEI CO., LTD. |

### <Synthesis Example 1: Polyamide Resin of MP12 (30)>

In a jacketed reactor equipped with an agitator, a partial condenser, a cooler, a thermometer, a dropping funnel, and a nitrogen gas introduction tube, precisely weighed 60 mol of dodecanedioic acid was placed, then the reactor was sufficiently purged with nitrogen and the temperature was increased to 180°C under a small amount of nitrogen gas stream, and thus the dodecanedioic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of p/m-xylylenediamine was removed from the system through the partial condenser and the cooler. After completion of the dropwise addition of p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### <Synthesis Example 2: Polyamide Resin of MP12 (40)>

In a jacketed reactor equipped with an agitator, a partial condenser, a cooler, a thermometer, a dropping funnel, and a nitrogen gas introduction tube, precisely weighed 60 mol of dodecanedioic acid was placed, then the reactor was sufficiently purged with nitrogen and the temperature was increased to 180°C under a small amount of nitrogen gas stream, and thus the dodecanedioic acid was dissolved to form a uniformly fluidized state. To this, 60 mol of p/m-xylylenediamine containing a diamine component in which 40 mol% was p-xylylenediamine and 60 mol% was m-xylylenediamine was added dropwise over 160 minutes while agitation was performed. At this time, the internal pressure of the reaction system was at normal pressure, and the internal temperature was continuously increased to 250°C. The water distilled along with the dropwise addition of p/m-xylylenediamine was removed from the system through the partial condenser and the cooler. After completion of the dropwise addition of p/m-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### <Synthesis Example 3: Polyamide Resin of PXD12>

In a jacketed reactor equipped with an agitator, a partial condenser, a cooler, a thermometer, a dropping funnel, and a nitrogen gas introduction tube, precisely weighed 60 mol of dodecanedioic acid was placed, then the reactor was sufficiently purged with nitrogen and the temperature was increased to 180°C under a small amount of nitrogen gas stream, and thus the dodecanedioic acid was dissolved to form a uniformly fluidized state. To this, 60 mol of p-xylylenediamine was added dropwise over 160 minutes while agitation was performed. During this, the internal pressure of the reaction system was at normal pressure, and the internal temperature was continuously raised to 290°C. The water that distilled out along with the dropwise addition of p-xylylenediamine was removed from the system through the partial condenser and the cooler. After completion of the dropwise addition of p-xylylenediamine, the liquid temperature of 290°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 300°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### <Synthesis Example 4: Polyamide Resin of MP14 (30)>

In a jacketed reactor equipped with an agitator, a partial condenser, a cooler, a thermometer, a dropping funnel, and a nitrogen gas introduction tube, precisely weighed 60 mol of tetradecanedioic acid was placed, then the reactor was sufficiently purged with nitrogen and the temperature was raised to 180°C under a small amount of nitrogen gas stream, and thus the tetradecanedioic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 240°C. The water that distilled out along with the dropwise addition of p/m-xylylenediamine was removed from the system through the partial condenser and the cooler. After completion of the dropwise addition of p/m-xylylenediamine, the liquid temperature of 240°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 250°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### <Synthesis Example 5: Polyamide Resin of MP10>

In a jacketed reactor equipped with an agitator, a partial condenser, a cooler, a thermometer, a dropping funnel, and a nitrogen gas introduction tube, precisely weighed 60 mol of sebacic acid was placed, then the reactor was sufficiently purged with nitrogen and the temperature was raised to 180°C under a small amount of nitrogen gas stream, and thus the sebacic acid was dissolved to form a uniformly fluidized state. To this, 60 mol of p/m-xylylenediamine containing a diamine component in which 30 mol% was p-xylylenediamine and 70 mol% was m-xylylenediamine was added dropwise over 160 minutes while agitation was performed. During this, the internal pressure of the reaction system was at normal pressure, and the internal temperature was continuously raised to 250°C. The water that distilled out along with the dropwise addition of p-xylylenediamine was removed from the system through the partial condenser and the cooler. After completion of the dropwise addition of p-xylylenediamine, the liquid temperature of 250°C was maintained to continue the reaction for 10 minutes. Thereafter, the internal pressure of the reaction system was continuously reduced to 600 Torr over 10 minutes, and then the reaction was continued for 20 minutes. During this, the reaction temperature was continuously raised to 260°C. After completion of the reaction, by application of a pressure of 0.3 MPa using a nitrogen gas in the reactor, the polymer was taken out as a strand from a nozzle at a bottom part of the polymerization tank and cooled with water. Then, the strand was cut into a pellet shape, and thus pellets of a melt polymerization product were obtained.

### 2. Examples 1-1 to 1-9, Reference Examples 1-1 to 1-3, and Comparative Examples 1-1 to 1-7

### <Compound>

The components indicated in Table 1 were precisely weighed as indicated in Tables 2 or 3, and the components other than the glass fibers were blended in a tumbler, and then the mixture was introduced from the base of a twin-screw extruder (TEM26SS, available from Shibaura Machine Co., Ltd.) and melted. Subsequently, the glass fibers were side-fed to prepare pellets of the resin composition. The temperature of the twin-screw extruder was set to 280°C.

### <Flexural Modulus (GPa)>

The resin composition (pellets) obtained by the above-described production method were dried at 80°C for 12 hours, and then injection-molded into ISO tensile test pieces (4 mm thick) by an injection-molding machine ("NEX140III" available from Nissei Plastic Industrial Co., Ltd.) under the conditions: a cylinder temperature of 280°C, a mold temperature of 90°C, and a molding cycle of 50 seconds.

According to ISO178, the ISO tensile test pieces (4 mm thick) were used to measure the flexural modulus (unit: GPa) in an environment of temperature of 23°C and 50% RH. Evaluation was made as follows. 5: 8.0 GPa or more
4: 7.5 GPa or more and less than 8.0 GPa
3: 7.0 GPa or more and less than 7.5 GPa
2: 6.5 GPa or more and less than 7.0 GPa
1: Less than 6.5 GPa

### <Fogging Test (%)>

The resin composition (pellets) obtained by the above-described production method were dried at 80°C for 12 hours, and then injection-molded into test pieces having a diameter of Φ80 mm and a thickness of 2mm by an injection-molding machine ("NEX140III" available from Nissei Plastic Industrial Co., Ltd.) under the conditions: a cylinder temperature of 280°C, a mold temperature of 90°C, and a molding cycle of 50 seconds.

With reference to ISO 6452, the test pieces having a diameter of φ80mm and a thickness of 2 mm were conditioned at 23°C and 50% RH for 16 hours and then subjected to a fogging test using a fogging tester WF-2 (available from Suga Test Instruments Co., Ltd.) under the conditions: a test temperature of 150°C and a test time of 3 hours. Thereafter, the glass plate was allowed to stand at 23°C and 50% RH for 1 hour. The specular glossiness of the glass before and after the test was measured using a glossmeter PG-IIM (available from NIPPON DENSHOKU INDUSTRIES CO., LTD.) to calculate the glass haze degree.

### <<Measurement Method of Specular Glossiness Measurement>>

Before the fogging test, the specular glossiness of the glass plate was measured at four points. A fogging test was then performed. After the fogging test, the glass plate was allowed to stand for 1 hour, and the specular glossiness was measured again at four points. $Glass haze degree \left(%\right) = {R}^{2} / {R}^{1} \times 100$
R¹: specular glossiness of glass before fogging test
R²: specular glossiness of glass after the fogging test

The glass haze degree was evaluated as follows.
5: 90% or more
4: 80% or more and less than 90%
3: 70% or more and less than 80%
2: 60% or more and less than 70%
1: Less than 60%

### <Zinc Chloride Resistance (%)>

The ISO tensile test pieces (4 mm thick) were immersed in a 50 mass% aqueous zinc chloride solution at 23°C for 90 days, and the flexural modulus was measured in the same manner as described above. The retention ratio of the flexural modulus after immersion relative to that before immersion was calculated. Evaluation was made as follows.

The zinc chloride resistance was evaluated as follows.
5: 85% or more
4: 75% or more and less than 85%
3: 70% or more and less than 75%
2: 60% or more and less than 70%
1: Less than 60%

### <Water Absorption Percentage (%)>

The water absorption percentage was determined by processing the ISO tensile test pieces into test pieces recommended by ISO178 (80 mm × 10 mm × 4 mm thick), immersing the molded pieces in water at 23°C for 90 days, and then measuring the mass of the molded pieces. The water absorption percentage was defined as the percentage of the difference between the mass after immersion and the mass before immersion. Evaluation was made as follows.
5: 2.5% or less
4: More than 2.5% and 3.5% or less
3: More than 3.5% and 4.5% or less
2: More than 4.5% and 5.5% or less
1: More than 5.5%

### <In-mold Crystallization>

The pellets obtained by the above-described production method were dried at 120°C for 4 hours, and then injection-molded into a three-stage plate of 100 mm in length × 60 mm in width having thicknesses of 3 mm (a length of 40 mm), 2 mm (a length of 30 mm), and 1 mm (a length of 30 mm) by an injection-molding machine ("NEX140III" available from Nissei Plastic Industrial Co., Ltd.) under the conditions: a cylinder temperature of from 200 to 300°C, a mold temperature of 90°C, cooling time of 30 seconds, a pressure holding time of 15 seconds, and a cycle time of 50 seconds.

In-mold crystallization was evaluated based on the presence or absence of a crystallization energy Hch peak when a 1 mm-thick portion of the three-stage plate was heated at 10°C/min with a differential scanning calorimeter (DSC-60A, available from Shimadzu Corporation).

### Evaluation was made as follows.

5: The crystallization energy Hch is less than 0.1 J/g (crystallized at a mold temperature of 90°C)
1: The crystallization energy Hch is 0.1 J/g or more (not crystallized at a mold temperature of 90°C)

### <Comprehensive Evaluation>

Based on the above results, comprehensive evaluation was performed. Specifically, evaluation was made as follows.
5: The average of the evaluation values for each evaluation item is more than 4.0
4: The average of the evaluation values for each evaluation item is more than 3.0 and 4.0 or less
3: The average of the evaluation values for each evaluation item is more than 2.5 and 3.0 or less
2: The average of the evaluation values for each evaluation item is more than 2.0 and 2.5 or less
1: The average of the evaluation values for each evaluation item is 2.0 or less, or the in-mold crystallization is rated as 1

**[Table 2]**

| | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|
| Type of aliphatic PA1 | PA66 | PA66 | PA66 | PA66 | PA66 | PA66 | PA66 | PA6 | PA6 |
| Content of aliphatic PA1 | 55.5 | 41.5 | 27.5 | 13.5 | 27.5 | 41.5 | 41.5 | 41.5 | 27.5 |
| Type of aliphatic PA2 | | | | | | | | | |
| Content of aliphatic PA2 | | | | | | | | | |
| Type of XDPA | MP12 (30) | MP12 (30) | MP12 (30) | MP12 (30) | MP12 (40) | PXD12 | MP14 (30) | MP12 (30) | MP12 (30) |
| Content of XDPA | 14 | 28 | 42 | 56 | 42 | 28 | 28 | 28 | 42 |
| Content of reinforcing filler | 30 | 30 | 30 | 30 | 30 | 30 | 30 | 30 | 30 |
| Content of nucleator | 0.5 | 0.5 | 0.5 | 0.5 | 0.5 | 0.5 | 0.5 | 0.5 | 0.5 |
| | | | | | | | | | |
| Flexural modulus (GPa) | 5 | 5 | 5 | 5 | 5 | 5 | 5 | 5 | 5 |
| Fogging test (%) | 3 | 3 | 4 | 5 | 4 | 3 | 3 | 4 | 5 |
| Zinc chloride resistance (%) | 4 | 5 | 5 | 5 | 5 | 5 | 5 | 2 | 3 |
| Water absorption percentage (%) | 4 | 5 | 5 | 5 | 5 | 5 | 5 | 2 | 4 |
| In-mold crystallization | 5 | 5 | 5 | 5 | 5 | 5 | 5 | 5 | 5 |
| Comprehensive evaluation | 4 | 5 | 5 | 5 | 5 | 5 | 5 | 4 | 5 |

**[Table 3]**

| | Reference Example 1-1 | Reference Example 1-2 | Reference Example 1-3 | Comparative Example 1-1 | Comparative Example 1-2 | Comparative Example 1-3 | Comparative Example 1-4 | Comparative Example 1-5 | Comparative Example 1-6 | Comparative Example 1-7 |
|---|---|---|---|---|---|---|---|---|---|---|
| Type of aliphatic PA1 | - | PA6 | PA66 | PA66 | PA66 | PA66 | PA6 | PA6 | PA66 | PA66 |
| Content of aliphatic PA1 | - | 69.5 | 69.5 | 55.5 | 41.5 | 27.5 | 41.5 | 27.5 | 41.5 | 27.5 |
| Type of aliphatic PA2 | | | | PA612 | PA612 | PA612 | PA612 | PA612 | | |
| Content of aliphatic PA2 | | | | 14 | 28 | 42 | 28 | 42 | | |
| Type of XDPA | MP12 (30) | - | - | | | | | | MP10 | MP10 |
| Content of XDPA | 69.5 | - | - | | | | | | 28 | 42 |
| Content of reinforcing filler | 30 | 30 | 30 | 30 | 30 | 30 | 30 | 30 | 30 | 30 |
| Content of nucleator | 0.5 | 0.5 | 0.5 | 0.5 | 0.5 | 0.5 | 0.5 | 0.5 | 0.5 | 0.5 |
| | | | | | | | | | | |
| Flexural modulus (GPa) | 5 | 5 | 5 | 3 | 2 | 1 | 2 | 1 | 5 | 5 |
| Fogging test (%) | 5 | 4 | 1 | 1 | 2 | 2 | 3 | 3 | 3 | 4 |
| Zinc chloride resistance (%) | 5 | 1 | 2 | 2 | 2 | 3 | 1 | 1 | 4 | 4 |
| Water absorption percentage (%) | 5 | 1 | 3 | 3 | 3 | 4 | 1 | 2 | 4 | 4 |
| In-mold crystallization | 5 | 5 | 5 | 5 | 5 | 5 | 5 | 5 | 1 | 1 |
| Comprehensive evaluation | 5 | 3 | 2 | 2 | 2 | 2 | 1 | 1 | 1 | 1 |

### 3. Examples 2-1 to 2-8, Reference Examples 2-1 and 2-2, and Comparative Example 2-1 to 2-6

### <Compound>

The components indicated in Table 1 were precisely weighed as indicated in Tables 4 to 6, and the components other than the glass fibers were blended in a tumbler, and then the mixture was introduced from the base of a twin-screw extruder (TEM26SS, available from Shibaura Machine Co., Ltd.) and melted. Subsequently, the glass fibers were side-fed to prepare pellets of the resin composition. The temperature of the twin-screw extruder was set to 280°C.

### <Flexural Modulus (GPa)>

The resin composition (pellets) obtained by the above-described production method were dried at 80°C for 12 hours, and then injection-molded into ISO tensile test pieces (4 mm thick) by an injection-molding machine ("NEX140III" available from Nissei Plastic Industrial Co., Ltd.) under the conditions: a cylinder temperature of 280°C, a mold temperature of 90°C, and a molding cycle of 50 seconds.

According to ISO178, the ISO tensile test pieces (4 mm thick) were used to measure the flexural modulus (unit: GPa) in an environment of temperature of 23°C and 50% RH. Evaluation was made as follows. Since evaluation categories are based on the difference in the type of resin, the evaluation categories are different from those of Example 1-1. The same applies to the following performance.
5: 6.5 GPa or more
4: 6.0 GPa or more and less than 6.5 GPa
3: 5.5 GPa or more and less than 6.0 GPa
2: 5.0 GPa or more and less than 5.5 GPa
1: Less than 5.0 GPa

### <Fogging Test (%)>

The resin composition (pellets) obtained by the above-described production method were dried at 80°C for 12 hours, and then injection-molded into test pieces having a diameter of Φ80 mm and a thickness of 2 mm by an injection-molding machine ("NEX140III" available from Nissei Plastic Industrial Co., Ltd.) under the conditions: a cylinder temperature of 280°C, a mold temperature of 90°C, and a molding cycle of 50 seconds.

With reference to ISO 6452, the test pieces having a diameter of Φ80 mm and a thickness of 2 mm were conditioned at 23°C and 50% RH for 16 hours and then subjected to a fogging test using a fogging tester WF-2 (available from Suga Test Instruments Co., Ltd.) under the conditions: a test temperature of 150°C and a test time of 3 hours. Thereafter, the glass plate was allowed to stand at 23°C and 50% RH for 1 hour. The specular glossiness of the glass before and after the test was measured using a glossmeter PG-IIM (available from NIPPON DENSHOKU INDUSTRIES CO., LTD.) to calculate the glass haze degree.

### <<Measurement Method of Specular Glossiness Measurement>>

Before the fogging test, the specular glossiness of the glass plate was measured at four points. A fogging test was then performed. After the fogging test, the glass plate was allowed to stand for 1 hour, and the specular glossiness was measured again at four points. $Glass haze degree \left(%\right) = {R}^{2} / {R}^{1} \times 100$
R¹: specular glossiness of glass before fogging test
R²: specular glossiness of glass after the fogging test

The glass haze degree was evaluated as follows.
5: 90% or more
4: 75% or more and less than 90%
3: 60% or more and less than 75%
2: 45% or more and less than 60%
1: Less than 45%

### <CE10 Gas Barrier Property>

The pellets obtained by the above-described production method were dried at 120°C for 4 hours, and then injection-molded into flat test pieces (2 mm thick) by an injection-molding machine ("NEX140III" available from Nissei Plastic Industrial Co., Ltd.) under the conditions: a cylinder temperature of from 200 to 300°C, a mold temperature of 90°C, and a molding cycle of 50 seconds. A composition in which in-mold crystallization at 90°C could not be achieved was subjected to annealing at 150°C for 1 hour.

In a Φ38-mm aluminum cup, 15 cc of a mixed solvent of toluene (45 vol%), isooctane (45 vol%), and ethanol (10 vol%) was placed, the flat test piece was placed on a packing, and an aluminum lid having a hole of the same size as the packing and the mouth portion of the cup was attached thereto and fastened with screws.

The gas permeability coefficient (g·mm/m²•day) was calculated from a weight change before and after storage in a thermostatic chamber at 60°C for 1000 hours. $Gas permeability coefficient \left(g⋅mm/{m}^{2}⋅day\right) = \left[\left(\begin{matrix}mass before \\ storage - mass after storage\end{matrix}\right)\times \left(\begin{matrix}thickness of test \\ piece\end{matrix}\right)\right] / \left[\left(area of mouth portion of aluminum cup\right)\times \left(\begin{matrix}number of \\ days of storage\end{matrix}\right)\right]$

### Evaluation was made as follows.

5: 5.5 (g·mm/m²·day) or less
4: More than 5.5 (g·mm/m²·day) and 6.5 (g·mm/m²·day) or less
3: More than 6.5 (g·mm/m²·day) and 7.0 (g·mm/m²·day) or less
2: More than 7.0 (g·mm/m²·day) and 7.5 (g·mm/m²·day) or less
1: More than 7.5 (g·mm/m²·day)

### < Acid Resistance (%)>

The ISO tensile test pieces (4 mm thick) were immersed in a 10 mass% aqueous hydrogen chloride solution at 23°C for 90 days, and the flexural modulus was measured in the same manner as described above. The retention ratio of the flexural modulus after immersion relative to that before immersion was calculated. Evaluation was made as follows.

The acid resistance was evaluated as follows.
5: 75% or more
4: 60% or more and less than 75%
3: 45% or more and less than 60%
2: 35% or more and less than 45%
1: Less than 35%

### <Zinc Chloride Resistance (%)>

The ISO tensile test pieces (4 mm thick) were immersed in a 50 mass% aqueous zinc chloride solution at 23°C for 90 days, and the flexural modulus was measured in the same manner as described above. The retention ratio of the flexural modulus after immersion relative to that before immersion was calculated. Evaluation was made as follows.

The zinc chloride resistance was evaluated as follows.
5: 85% or more
4: 75% or more and less than 85%
3: 70% or more and less than 75%
2: 60% or more and less than 70%
1: Less than 60%

### <Water Absorption Percentage (%)>

The water absorption percentage was determined by processing the ISO tensile test pieces into test pieces recommended by ISO178 (80 mm × 10 mm × 4 mm thick), immersing the molded pieces in water at 23°C for 90 days, and then measuring the mass of the molded pieces. The water absorption percentage was defined as the percentage of the difference between the mass after immersion and the mass before immersion. Evaluation was made as follows.
5: 1.5% or less
4: More than 1.5% and 2.5% or less
3: More than 2.5% and 3.0% or less
2: More than 3.0% and 4.0% or less
1: More than 4.0%

### <In-mold Crystallization>

The pellets obtained by the above-described production method were dried at 120°C for 4 hours, and then injection-molded into a three-stage plate of 100 mm in length × 60 mm in width having thicknesses of 3 mm (a length of 40 mm), 2 mm (a length of 30 mm), and 1 mm (a length of 30 mm) by an injection-molding machine ("NEX140III" available from Nissei Plastic Industrial Co., Ltd.) under the conditions: a cylinder temperature of from 200 to 300°C, a mold temperature of 90°C, cooling time of 30 seconds, a pressure holding time of 15 seconds, and a cycle time of 50 seconds.

In-mold crystallization was evaluated based on the presence or absence of a crystallization energy Hch peak when a 1 mm-thick portion of the three-stage plate was heated at 10°C/min with a differential scanning calorimeter (DSC-60A, available from Shimadzu Corporation).

Evaluation was made as follows.
5: The crystallization energy Hch is less than 0.1 J/g (crystallized at a mold temperature of 90°C)
1: The crystallization energy Hch is 0.1 J/g or more (not crystallized at a mold temperature of 90°C)

### <Comprehensive Evaluation>

Based on the above results, comprehensive evaluation was performed. Specifically, evaluation was made as follows.
5: The average of the evaluation values for each evaluation item is more than 4.0
4: The average of the evaluation values for each evaluation item is more than 3.0 and 4.0 or less
3: The average of the evaluation values for each evaluation item is more than 2.5 and 3.0 or less
2: The average of the evaluation values for each evaluation item is more than 2.0 and 2.5 or less
1: The average of the evaluation values for each evaluation item is 2.0 or less, or the in-mold crystallization is rated as 1

**[Table 4]**

| | Example 2-1 | Example 2-2 | Example 2-3 | Example 2-4 | Example 2-5 | Example 2-6 |
|---|---|---|---|---|---|---|
| Type of aliphatic PA | PA612 | PA612 | PA612 | PA612 | PA612 | PA612 |
| Content of aliphatic PA | 55.5 | 41.5 | 27.5 | 13.5 | 41.5 | 41.5 |
| Type of XDPA | MP12 (30) | MP12 (30) | MP12 (30) | MP12 (30) | MP12 (40) | PXD12 |
| Content of XDPA | 14 | 28 | 42 | 56 | 28 | 28 |
| Content of reinforcing filler | 30 | 30 | 30 | 30 | 30 | 30 |
| Content of nucleator | 0.5 | 0.5 | 0.5 | 0.5 | 0.5 | 0.5 |
| Flexural modulus (GPa) | 3 | 4 | 5 | 5 | 4 | 4 |
| Fogging test (%) | 3 | 4 | 4 | 5 | 4 | 4 |
| CE10 Barrier property | 3 | 4 | 4 | 5 | 5 | 5 |
| Acid resistance (%) | 3 | 3 | 4 | 5 | 3 | 3 |
| Zinc chloride resistance (%) | 3 | 4 | 4 | 5 | 4 | 4 |
| Water absorption percentage (%) | 4 | 4 | 4 | 5 | 4 | 5 |
| In-mold crystallization | 5 | 5 | 5 | 5 | 5 | 5 |
| Comprehensive evaluation | 4 | 4 | 5 | 5 | 4 | 4 |

**[Table 5]**

| | Example 2-7 | Example 2-8 | Reference Example 2-1 | Reference Example 2-2 | Comparative Example 2-1 |
|---|---|---|---|---|---|
| Type of aliphatic PA | PA612 | PA610 | PA610 | PA612 | PA612 |
| Content of aliphatic PA | 41.5 | 27.5 | 69.5 | 69.5 | 55.5 |
| Type of XDPA | MP14 (30) | MP12 (30) | | | MP10 |
| Content of XDPA | 28 | 42 | | | 14 |
| Content of reinforcing filler | 30 | 30 | 30 | 30 | 30 |
| Content of nucleator | 0.5 | 0.5 | 0.5 | 0.5 | 0.5 |
| | | | | | |
| Flexural modulus (GPa) | 4 | 5 | 1 | 2 | 3 |
| Fogging test (%) | 4 | 4 | 2 | 3 | 3 |
| CE10 Barrier property | 3 | 4 | 3 | 2 | 4 |
| Acid resistance (%) | 3 | 4 | 1 | 1 | 2 |
| Zinc chloride resistance (%) | 4 | 4 | 2 | 2 | 3 |
| Water absorption percentage (%) | 5 | 4 | 3 | 3 | 4 |
| In-mold crystallization | 5 | 5 | 5 | 5 | 1 |
| Comprehensive evaluation | 4 | 5 | 1 | 1 | 1 |

**[Table 6]**

| | Comparative Example 2-2 | Comparative Example 2-3 | Comparative Example 2-4 | Comparative Example 2-5 | Comparative Example 2-6 |
|---|---|---|---|---|---|
| Type of aliphatic PA | PA612 | PA612 | PA612 | PA612 | PA610 |
| Content of aliphatic PA | 41.5 | 27.5 | 41.5 | 27.5 | 41.5 |
| Type of XDPA | MP10 | MP10 | MXD6 | MXD6 | MP10 |
| Content of XDPA | 28 | 42 | 28 | 42 | 28 |
| Content of reinforcing filler | 30 | 30 | 30 | 30 | 30 |
| Content of nucleator | 0.5 | 0.5 | 0.5 | 0.5 | 0.5 |
| | | | | | |
| Flexural modulus (GPa) | 5 | 5 | 5 | 5 | 5 |
| Fogging test (%) | 4 | 4 | 4 | 4 | 3 |
| CE10 Barrier property | 5 | 5 | 5 | 5 | 5 |
| Acid resistance (%) | 3 | 4 | 3 | 4 | 3 |
| Zinc chloride resistance (%) | 3 | 4 | 3 | 3 | 3 |
| Water absorption percentage (%) | 4 | 4 | 4 | 4 | 4 |
| In-mold crystallization | 1 | 1 | 1 | 1 | 1 |
| Comprehensive evaluation | 1 | 1 | 1 | 1 | 1 |

### 4. Examples 3-1 to 3-9, Reference Examples 3-1 and 3-2, and Comparative Examples 3-1 to 3-6

### <Compound>

The components indicated in Table 1 were precisely weighed as indicated in Tables 7 and 8, and the components other than the glass fibers were blended in a tumbler, and then the mixture was introduced from the base of a twin-screw extruder (TEM26SS, available from Shibaura Machine Co., Ltd.) and melted. Subsequently, the glass fibers were side-fed to prepare pellets of the resin composition. The temperature of the twin-screw extruder was set to 280°C.

### <Flexural Modulus (GPa)>

The resin composition (pellets) obtained by the above-described production method were dried at 80°C for 12 hours, and then injection-molded into ISO tensile test pieces (4 mm thick) by an injection-molding machine ("NEX140III" available from Nissei Plastic Industrial Co., Ltd.) under the conditions: a cylinder temperature of 280°C, a mold temperature of 90°C, and a molding cycle of 50 seconds.

According to ISO178, the ISO tensile test pieces (4 mm thick) were used to measure the flexural modulus (unit: GPa) in an environment of temperature of 23°C and 50% RH. Evaluation was made as follows. Since evaluation categories are based on the original performance of the resin, the evaluation categories are different from those of Example 1-1. The same applies to the following performance.
5: 7.0 GPa or more
4: 6.5 GPa or more and less than 7.0 GPa
3: 5.5 GPa or more and less than 6.5 GPa
2: 5.0 GPa or more and less than 5.5 GPa
1: Less than 5.0 GPa

### <CE10 Gas Barrier Property>

The pellets obtained by the above-described production method were dried at 120°C for 4 hours, and then injection-molded into flat test pieces (2 mm thick) by an injection-molding machine ("NEX140III" available from Nissei Plastic Industrial Co., Ltd.) under the conditions: a cylinder temperature of from 200 to 300°C, a mold temperature of 90°C, and a molding cycle of 50 seconds. A composition in which in-mold crystallization at 90°C could not be achieved was subjected to annealing at 150°C for 1 hour.

In a Φ38-mm aluminum cup, 15 cc of a mixed solvent of toluene (45 vol%), isooctane (45 vol%), and ethanol (10 vol%) was placed, the flat test piece was placed on a packing, and an aluminum lid having a hole of the same size as the packing and the mouth portion of the cup was attached thereto and fastened with screws.

The gas permeability coefficient (g·mm/m²·day) was calculated from a weight change before and after storage in a thermostatic chamber at 60°C for 1000 hours. $Gas permeability coefficient \left(g⋅mm/{m}^{2}⋅day\right) = \left[\left(\begin{matrix}mass before \\ storage - mass after storage\end{matrix}\right)\times \left(\begin{matrix}thickness of test \\ piece\end{matrix}\right)\right] / \left[\left(area of mouth portion of aluminum cup\right)\times \left(\begin{matrix}number of \\ days of storage\end{matrix}\right)\right]$

Evaluation was made as follows.
5: 10 (g·mm/m²·day) or less
4: More than 10 (g·mm/m²·day) and 15 (g·mm/m²·day) or less
3: More than 15 (g·mm/m²·day) and 20 (g·mm/m²·day) or less
2: More than 20 (g·mm/m²·day) and 25 (g·mm/m²·day) or less
1: More than 25 (g·mm/m²·day)

### <Fogging Test (%)>

The resin composition (pellets) obtained by the above-described production method were dried at 80°C for 12 hours, and then injection-molded into test pieces having a diameter of Φ80 mm and a thickness of 2 mm by an injection-molding machine ("NEX140III" available from Nissei Plastic Industrial Co., Ltd.) under the conditions: a cylinder temperature of 280°C, a mold temperature of 90°C, and a molding cycle of 50 seconds.

With reference to ISO 6452, the test pieces having a diameter of Φ80 mm and a thickness of 2 mm were conditioned at 23°C and 50% RH for 16 hours and then subjected to a fogging test using a fogging tester WF-2 (available from Suga Test Instruments Co., Ltd.) under the conditions: a test temperature of 150°C and a test time of 3 hours. Thereafter, the glass plate was allowed to stand at 23°C and 50% RH for 1 hour. The specular glossiness of the glass before and after the test was measured using a glossmeter PG-IIM (available from NIPPON DENSHOKU INDUSTRIES CO., LTD.) to calculate the glass haze degree.

### <<Measurement Method of Specular Glossiness Measurement>>

Before the fogging test, the specular glossiness of the glass plate was measured at four points. A fogging test was then performed. After the fogging test, the glass plate was allowed to stand for 1 hour, and the specular glossiness was measured again at four points. $Glass haze degree \left(%\right) = {R}^{2} / {R}^{1} \times 100$
R¹: specular glossiness of glass before fogging test
R²: specular glossiness of glass after the fogging test

The glass haze degree was evaluated as follows.
5: 40% or more
4: 30% or more and less than 40%
3: 25% or more and less than 30%
2: 20% or more and less than 25%
1: Less than 20%

### <Water Absorption Percentage (%)>

The water absorption percentage was determined by processing the ISO tensile test pieces into test pieces recommended by ISO178 (80 mm × 10 mm × 4 mm thick), immersing the molded pieces in water at 23°C for 90 days, and then measuring the mass of the molded pieces. The water absorption percentage was defined as the percentage of the difference between the mass after immersion and the mass before immersion. Evaluation was made as follows.
5: 0.7% or less
4: More than 0.7% and 0.9% or less
3: More than 0.9% and 1.1% or less
2: More than 1.1% and 1.3% or less
1: More than 1.3%

### <In-mold Crystallization>

The pellets obtained by the above-described production method were dried at 120°C for 4 hours, and then injection-molded into a three-stage plate of 100 mm in length × 60 mm in width having thicknesses of 3 mm (a length of 40 mm), 2 mm (a length of 30 mm), and 1 mm (a length of 30 mm) by an injection-molding machine ("NEX140III" available from Nissei Plastic Industrial Co., Ltd.) under the conditions: a cylinder temperature of from 200 to 300°C, a mold temperature of 90°C, cooling time of 30 seconds, a pressure holding time of 15 seconds, and a cycle time of 50 seconds.

In-mold crystallization was evaluated based on the presence or absence of a crystallization energy Hch peak when a 1 mm-thick portion of the three-stage plate was heated at 10°C/min with a differential scanning calorimeter (DSC-60A, available from Shimadzu Corporation).

### Evaluation was made as follows.

5: The crystallization energy Hch is less than 0.1 J/g (crystallized at a mold temperature of 90°C)
1: The crystallization energy Hch is 0.1 J/g or more (not crystallized at a mold temperature of 90°C)

### <Comprehensive Evaluation>

Based on the above results, comprehensive evaluation was performed. Specifically, evaluation was made as follows.
5: The average of the evaluation values for each evaluation item is more than 4.0
4: The average of the evaluation values for each evaluation item is more than 3.0 and 4.0 or less
3: The average of the evaluation values for each evaluation item is more than 2.5 and 3.0 or less
2: The average of the evaluation values for each evaluation item is more than 2.0 and 2.5 or less
1: The average of the evaluation values for each evaluation item is 2.0 or less, or the in-mold crystallization is rated as 1

**[Table 7]**

| | Example 3-1 | Example 3-2 | Example 3-3 | Example 3-4 | Example 3-5 | Example 3-6 | Example 3-7 | Example 3-8 |
|---|---|---|---|---|---|---|---|---|
| Type of aliphatic PA | PA12 | PA12 | PA12 | PA12 | PA12 | PA12 | PA12 | PA11 |
| Content of aliphatic PA | 55.5 | 41.5 | 27.5 | 13.5 | 41.5 | 41.5 | 41.5 | 41.5 |
| Type of XDPA | MP12 (30) | MP12 (30) | MP12 (30) | MP12 (30) | MP12 (40) | PXD12 | MP14 (30) | MP12 (30) |
| Content of XDPA | 14 | 28 | 42 | 50 | 28 | 28 | 28 | 28 |
| Content of reinforcing filler | 30 | 30 | 30 | 30 | 30 | 30 | 30 | 30 |
| Content of nucleator | 0.5 | 0.5 | 0.5 | 0.5 | 0.5 | 0.5 | 0.5 | 0.5 |
| Flexural modulus (GPa) | 3 | 4 | 5 | 5 | 4 | 4 | 3 | 4 |
| CE10 Barrier property | 3 | 4 | 5 | 5 | 4 | 4 | 3 | 5 |
| Fogging test (%) | 3 | 1 | 5 | 5 | 5 | 5 | 5 | 5 |
| Water absorption percentage (%) | 4 | 4 | 4 | 4 | 4 | 4 | 4 | 4 |
| In-mold crystallization | 5 | 5 | 5 | 5 | 5 | 5 | 5 | 5 |
| Comprehensive evaluation | 3 | 5 | 5 | 5 | 5 | 5 | 4 | 4 |

**[Table 8]**

| | Example 3-9 | Reference Example 3-1 | Reference Example 3-2 | Comparative Example 3-1 | Comparative Example 3-2 | Comparative Example 3-3 | Comparative Example 3-4 | Comparative Example 3-5 | Comparative Example 3-6 |
|---|---|---|---|---|---|---|---|---|---|
| Type of aliphatic PA | PA11 | PA11 | PA12 | PA12 | PA12 | PA12 | PA12 | PA12 | PA11 |
| Content of aliphatic PA | 27.5 | 69.5 | 69.5 | 55.5 | 41.5 | 27.5 | 41.5 | 27.5 | 41.5 |
| Type of XDPA | MP12 (30) | - | - | MP10 | MP10 | MP10 | MXD6 | MXD6 | MP10 |
| Content of XDPA | 42 | - | - | 14 | 28 | 42 | 28 | 42 | 28 |
| Content of reinforcing filler | 30 | 30 | 30 | 30 | 30 | 30 | 30 | 30 | 30 |
| Content of nucleator | 0.5 | 0.5 | 0.5 | 0.5 | 0.5 | 0.5 | 0.5 | 0.5 | 0.5 |
| Flexural modulus (GPa) | 5 | 1 | 1 | 2 | 3 | 5 | 4 | 5 | 1 |
| CE10 Barrier property | 5 | 3 | 2 | 3 | 5 | 5 | 5 | 5 | 5 |
| Fogging test (%) | 5 | 1 | 1 | 3 | 5 | 5 | 5 | 5 | 5 |
| Water absorption percentage (%) | 4 | 4 | 4 | 4 | 3 | 3 | 2 | 2 | 3 |
| In-mold crystallization | 5 | 5 | 5 | 1 | 1 | 1 | 1 | 1 | 1 |
| Comprehensive evaluation | 5 | 2 | 1 | 1 | 1 | 1 | 1 | 1 | 1 |

As is clear from the above results, the resin composition of the present invention can be appropriately crystallized in a mold, and a resin composition having an excellent balance of other physical properties can be provided.

In contrast, even in the case of the xylylenediamine-based polyamide resin, when sebacic acid or adipic acid was used as the dicarboxylic acid serving as a raw material, the in-mold crystallization was poor (Comparative Examples 1-6 and 1-7, Comparative Examples 2-1 to 2-6, and Comparative Examples 3-1 to 3-6) .

## Claims

1. A resin composition comprising a xylylenediamine-based polyamide resin, an aliphatic polyamide resin, and a reinforcing filler, wherein
the xylylenediamine-based polyamide resin includes diamine-derived structural units and dicarboxylic acid-derived structural units,
70 mol% or more of the diamine-derived structural units are derived from xylylenediamine, and
70 mol% or more of the dicarboxylic acid-derived structural units are derived from an α,ω-linear aliphatic dicarboxylic acid having from 11 to 20 carbon atoms.

2. The resin composition according to claim 1, wherein from 10 mol% to 90 mol% of the diamine-derived structural units in the xylylenediamine-based polyamide resin are derived from m-xylylenediamine, and from 90 mol% to 10 mol% of the diamine-derived structural units are derived from p-xylylenediamine, provided that a total of m-xylylenediamine and p-xylylenediamine does not exceed 100 mol%.

3. The resin composition according to claim 1, wherein 70 mol% or more of the dicarboxylic acid-derived structural units in the xylylenediamine-based polyamide resin are derived from dodecanedioic acid and/or tetradecanedioic acid.

4. The resin composition according to claim 1, wherein
from 10 mol% to 90 mol% of the diamine-derived structural units in the xylylenediamine-based polyamide resin are derived from m-xylylenediamine, and from 90 mol% to 10 mol% of the diamine-derived structural units are derived from p-xylylenediamine, provided that a total of m-xylylenediamine and p-xylylenediamine does not exceed 100 mol%; and
70 mol% or more of the dicarboxylic acid-derived structural units in the xylylenediamine-based polyamide resin are derived from dodecanedioic acid and/or tetradecanedioic acid.

5. The resin composition according to any one of claims 1 to 4, wherein the aliphatic polyamide resin includes a structural unit including -(CH₂)ₙ-, where n is from 3 to 20.

6. The resin composition according to any one of claims 1 to 4, wherein the aliphatic polyamide resin includes at least one selected from the group consisting of polyamide 6, polyamide 66, polyamide 46, polyamide 666, polyamide 10, polyamide 11, polyamide 12, polyamide 610, polyamide 611, and polyamide 612.

7. The resin composition according to any one of claims 1 to 6, wherein a mass ratio of the xylylenediamine-based polyamide resin to the aliphatic polyamide resin is from 5:95 to 80:20.

8. The resin composition according to any one of claims 1 to 7, wherein the reinforcing filler includes a glass fiber.

9. The resin composition according to any one of claims 1 to 8, wherein the reinforcing filler includes a chopped strand.

10. A pellet comprising the resin composition described in any one of claims 1 to 9.

11. A molded article comprising the resin composition described in any one of claims 1 to 9.

12. The molded article according to claim 11, wherein the molded article is an injection-molded article.
